# EUROPEAN PATENT APPLICATION

(11) **EP 1 316 899 A2**
(43) Date of publication of application: **04.06.2003**
(21) Application number: 02026452.9
(22) Date of filing: 27.11.2002
(51) Int. Cl.: G06F 17/30

(54) **Information storage input system, information storage input service and screen display system**

(30) Priority: 27.11.2001 JP 2001360639
(71) Applicant: Toshiba Tec Kabushiki Kaisha, Chiyoda-ku, Tokyo (JP)
(72) Inventor: Yamamoto, Hiroshi, Toda-shi, Saitama-ken (JP); Yamaguchi, Hiroshi, Shizuoka-ken (JP); Shiori, Katsuo, Yokohama-shi, Kanagawa-ken (JP); Harada, Hirofumi, Irvine CA 92614 (US); Higashi, Keishi, Hino-shi, Tokyo (US); Sato, Mitsuya, Tokyo (US)
(74) Representative: HOFFMANN - EITLE

(57) **Abstract**

An information storage input system for storing predetermined storage data in a storage server on a network accessible from a communication device open to public, includes a plurality of remote input terminal for inputting supplied input data in a predetermined input form, a remote input server for receiving input data from the remote input terminal, and a mobile communication terminal for communicating with at least the remote input server. Here, at least when the input data is stored in the storage server as the storage data, the remote input server notifies the fact to the mobile communication terminal.

## Description

### BACKGROUND OF THE INVENTION

### 1. Field of the Invention

The present invention relates to an information storage input system ad an information storage input service. For example, the present invention may be suitable for being used with a storage service provided on the Internet.

Also, the present invention relates to a screen display system.

### 2. Description of the Related Art

Conventionally, when a storage service is used, which is provided by storing desired data in a storage server arranged on the internet, multiple users attempting to share the data are supported by plug-in software by using a personal computer including a browser. Then, each of the user requests to download the data basically in the same manner as viewing a Web page and downloads the data into the requesting personal computer. Here, the storage server may be a kind of Web server by viewing from a client side such as a personal computer.

Data open to public, which is stored in a storage server, can be download over the Internet by using an URL of the data. Therefore, the data can be shared easily and widely by giving the URL.

On the other hand, in order to upload data to the storage server, a user uses a personal computer at home or office, for example, to transfer data to the storage server. Thus, the data transfer is performed in the direction opposite against downloading.

Recently, various kinds of mobile information terminals including mobile telephones have been evolved significantly. Many kinds of mobile information terminals include a Web browser and spread widely. Thus, Web pages can be viewed widely using a mobile information terminal over the Internet while moving.

However, a mobile telephone can generally include a memory device having a significantly smaller amount of capacity than that of a personal computer, for example. Thus, the size and form of data, which can be handled by the capacity are limited necessarily. In addition, since a mobile telephone does not have an input function, such as a scanner, in general, data recorded on paper cannot be uploaded to a storage server.

Therefore, even when a storage server is located on the Internet, which is accessible from anywhere, data can be actually uploaded only at office or hole, for example. The mobility cannot have higher flexibility as much as viewing through a mobile telephone, which hinders sufficient data sharing.

### SUMMARY OF THE INVENTION

An information storage input system for storing predetermined storage data in a storage server on a network accessible from a communication device open to public, includes a plurality of remote input terminal for inputting supplied input data in a predetermined input form, a remote input server for receiving input data from the remote input terminal, and a mobile communication terminal for communicating with at least the remote input server. Here, at least when the input data is stored in the storage server as the storage data, the remote input server notifies the fact to the mobile communication terminal.

### BRIEF DESCRIPTION OF THE DRAWINGS

Fig. 1 is a schematic diagram showing an entire construction example relating to a main part of a storage system according to an embodiment;
Fig. 2 is an operational sequence in the storage system according to the embodiment for inputting without using Bluetooth of a mobile telephone;
Fig. 3 is an operational sequence in the storage system according to the embodiment for inputting without using Bluetooth of a mobile telephone;
Fig. 4 is an operational sequence in the storage system according to the embodiment for inputting without using Bluetooth of a mobile telephone;
Fig. 5 is an operational sequence in the storage system according to the embodiment where the use of Bluetooth of the mobile telephone is interrupted;
Fig. 6 is an operational sequence in the storage system according to the embodiment where the use of Bluetooth of the mobile telephone is interrupted;
Figs. 7A to 7C are schematic diagrams each showing an example of a display screen of an MMK terminal in the storage system according to the embodiment;
Figs. 8A to 8C are schematic diagrams each showing an example of a display screen of the mobile telephone in the storage system according to the embodiment;
Fig. 9 is a schematic diagram showing an example of a logical construction of a database used in the storage system according to the embodiment; and
Figs. 10A to 10C are schematic diagrams each showing an example of a logical construction of each database used in the storage system according to the embodiment.

### DESCRIPTION OF THE PREFERRED EMBODIMENTS

An embodiment will be described below by using as an example a case where an information storage input system, an information storage input service and a screen display system according to the present invention are applied to a storage server and a remote printing server (storage service and a remote printing service) located on the Internet.

An online storage service provided by a storage server generally stores a user file containing user data sent by users in a data storage area specifically provided on a network. Then, the storage service can read data in accordance with an output request from a user and/or overwrite data as necessary.

However, the details of the service depend on service providers variously.

In other words, the various user data can be handled such as an image, a moving picture, a document, a product catalog, program code and a software package. Some providers may allow users to read/write data. Some providers may allow to read but prohibit to write data. Furthermore, some collect fees in accordance with storage (consumed disc capacity) of and/or reading data while the other do not collect. Some providers gain benefits from advertisement, for example, without collecting fees. Alternatively, even without gaining benefits from advertisement, some providers provide the service totally free of charge to specific users (such as users having purchased a specific software product (software, which can function as a client of a storage server)). However, in the case of free of charge, the cost for service providing may be included in the price of the product.

Various approaches may be considered for achieving a storage server mechanism for providing these services on an existing system (for example, an anonymous FTP server is used to upload user data, which can be open to public and be downloaded even by accessing from an FTP client). However, in reality, most storage server mechanisms are implemented by using a hypertext system.

A storage server established on a hypertext system will be described as an example in view of the convenience of an access from a mobile telephone including an existing browser.

### Construction of Embodiment

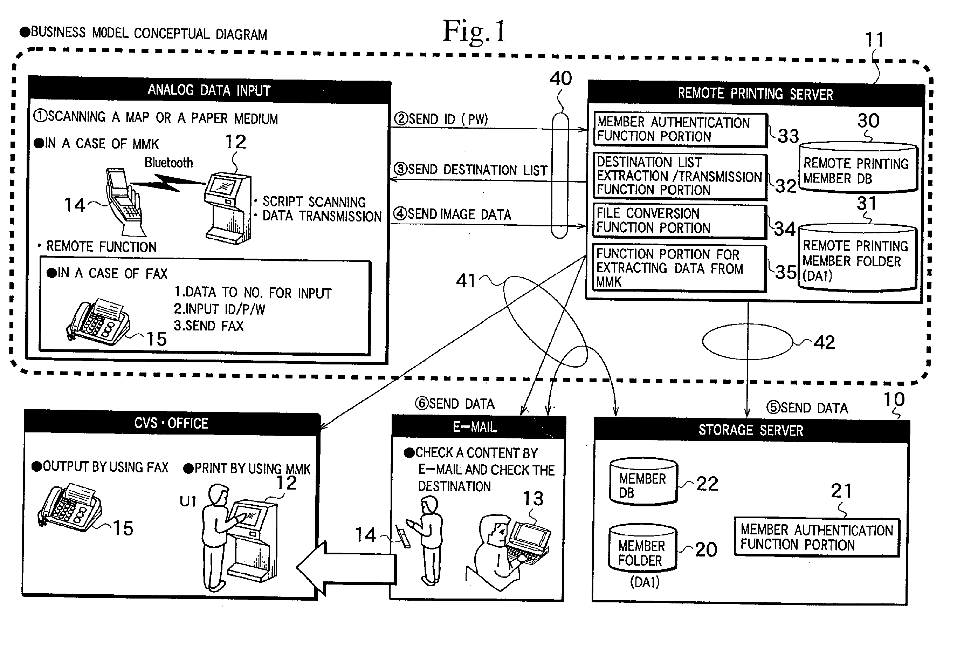

An example of an entire construction example of a storage system according to this embodiment is shown in Fig. 1.

In Fig. 1, the storage system includes a storage server 10, a remote printing server 11, a multimedia kiosk (MMK) terminal 12, a personal computer 13, a mobile telephone 14, a FAX terminal 15, and networks 40 to 42.

Each of the networks 40 to 42 may be established by the Internet. Alternatively, the network 41 accommodating the MMK terminal 12 may be established as a LAN accommodating multiple MMK terminals.

The communication between the mobile telephone 14 and the storage server 10 and the communication between the mobile telephone 14 and the remote printing server 14 are implemented over a mobile telephone network, not shown. Furthermore, the communication between the FAX 15 and the remote printing server 11 is implemented over the network 41 and a FAX network, not shown.

When the storage server 10 and the remote printing server 11 are located in another site on the Internet, the network 42 allowing the communication therebetween is the Internet.

As described above, the storage server 10 provides an interface as a Web server. Therefore, the storage server 10 can be accessed basically by using HTTP from the mobile telephone 14 and/or the personal computer 13, which include a browser.

An example of an internal construction of the storage server 10 is shown in Fig. 1.

That is, the storage server 10 includes a storage database 20, a member authentication function portion 21, and a storage member database 22.

The storage database 20 corresponds to the specific data storage area. However, the storage database 20 is generally and physically a hard disk having a large amount of capacity in reality in order to achieve a huge amount of memory capacity and to obtain a nonvolatile memory. Naturally, a user U1 operating the mobile telephone 14 can search and/or add data to the storage database 20 easily without recognizing the physical construction of storing each data by using a DBMS function, not shown.

The storage database 20 is internally and logically divided into folders for members, respectively. Data uploaded by each member (for example, user U1) is stored in a folder of the member.

Now, data DA1 to be sent by the user U1 to a desired destination will be described below as an example. Since the destination includes the storage server 10, the data DA1 is uploaded to the storage server 10 as desired by the user U1.

The type of the data DA1 may be an image, a moving picture, a document, a product catalog and a software package, for example, as described above. The DA1 may be electrified at the point of the transmission and may be stored in a RAM or a hard disk, for example. Here, the data DA1 is assumed as data recorded on paper, which is a recording medium.

Data stored in the storage database 20 naturally includes an image and/or a document, which are main data (including DA1) and attribute information (a name of a person having registered main data, the registration data, the presence of a limit to access authority for the main data, the content of the limit and so on) used for managing the main data.

Next, the member authentication function portion 21 performs personal authentication for verifying validity of a user accessing to the storage server 10 (for example, the user U1 accessing to the mobile telephone 14 or the MMK terminal 12).

In this embodiment, a membership system is adopted, and only the user having registered with the membership of both of the storage server 10 and the remote printing server 11 is authenticated as the a valid user. However, when a relationship of mutual trust is provided between the storage server 10 and the remote printing server 11, the user U1 can uses the system if the user U1 is a member of either the storage server 10 or the remote printing server 11. In this case, once user ID is authenticated in one server, the user ID can be handled as being authenticated in the other server. The member authentication function portion 21 is connected with a storage service member database 22 storing an ID (identification information for uniquely identifying each member in the storage server) and/or a password (PW) of each member. When accessed by a user, the validity is verified by comparing the ID and the password sent by the user with those stored in the storage service member database 22.

The storage service member database 22 may be located within the storage server 10 or within the remote printing server 11. Alternatively, the storage service member database 22 may be located in both of the storage server 10 and the remote printing server 11. When located in both of them, the consistency of data has to be maintained.

A password in plain text may be stolen when transmitted over the Internet, some encryption technology may be used together. For example, SSL may be used which is widely used in hyper text systems. However, encrypted information (including ID information and password information) may be transmitted which is obtained by encrypting an ID by using the password as an encryption key. Thus, a load for processing capacity in the mobile telephone 14 side can be smaller than that of the general SSL.

When the member registration is performed not by a mobile telephone but only by a personal computer, the general SSL can be used directly, which improves the security.

A file (file containing DA1, for example) uploaded to the storage server 10 by each user may be managed in a directory with a tree structure. Then, one section of the tree may be assigned as a home directory (corresponding to the folder for each member) representing each user (for example, U1) at the time of the member registration. Thus, all of the files uploaded by the user can be stored in the home directory as a leaf of the tree ("leaf" refers to the lowest section).

Thus, by inputting an URL indicating the home directory to the browser for downloading, the user can display a list of the file uploaded by the user efficiently. Differentiating the file open to public and the file not open to public is effective for efficient file management.

Various kinds of function portions are included in the storage server 10 in addition to the shown components 20 to 22, such as a data encryption function portion for encrypting and decrypting data as necessary, a communication function portion corresponding to protocols such as TCP/IP and HTTP, a CGI allowing interactive page viewing, and access management database for storing and managing access logs.

On the other hand, the remote printing server 11 communicating with the storage server 10 over the Internet 42 includes a remote printing member database 30, a remote printing database (member folder) 31, a destination list extraction/transmission function portion 32, a member authentication function portion 33, a file conversion function portion 34, and a data extraction function portion 35 for extracting data from an MMK.

The remote printing member database 30 is a database for member management corresponding to the storage service member database 22 within the storage server 10. However, information (such as a user ID and a password) relating to a member of the remote printing service is registered in the remote printing member database 30 here.

In this embodiment, the storage server 10 and the remote printing server 11 have a relationship of mutual trust. A user (for example, U1) can be registered with the membership of the remote printing server 11 automatically when the user is registered with the membership of the storage server 10. Then, the sufficient number of registered members can be obtained for a newly started remote printing service, which is preferable in operation. In this case, the data stored in the storage service member database 22 and the data stored in the remote printing member database 30 may belong to the same user mostly or entirely. However, the ID and/or the password do not have to be the same in both of the databases.

Essentially, the storage server 10 and the remote printing server 11 can function independently and may not start to operate at the same time. Thus, member registration is performed independently when these servers adopt membership systems. However, in this embodiment, in order to achieve the interoperation between the storage server 10 and the remote printing server 11, member information in the storage server 10 is automatically collected when membership registration is performed with the remote printing server 11. As a result, the stored contents are related between the storage service member database 22 and the remote printing member database 30.

This is a case where the remote printing server 11 is located and starts to operate at the same time as the start of operating the storage server 10. If the member registration cannot be performed only with the remote printing server, the content stored in the storage service member database 22 and the content stored in the remote printing member database 30 can be entirely the same with respect to the corresponding data items (for example, user ID's). Otherwise, these contents generally differ.

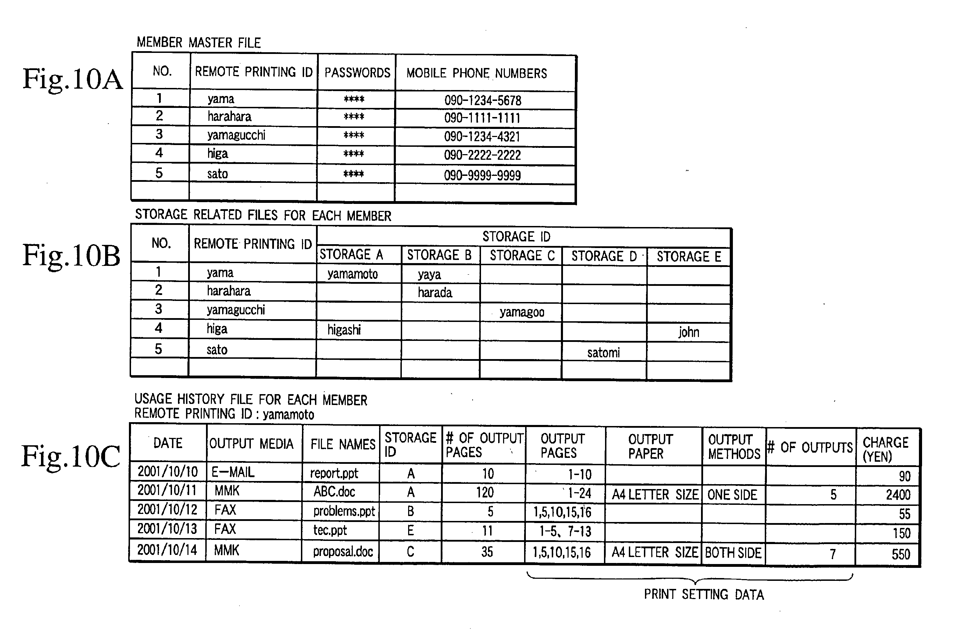

Not only one but also multiple storage servers can interoperate with one remote printing server (for example, remote printing server 11). For example, five storage server shown in Fig. 10B, that is, storage units A to E (where A to E are storage ID used when the remote printing server 11 uniquely identifies storage servers) may be storage servers interoperating with the remote printing server 11. A member master file, a storage related file for each member in Figs. 10A to 10C, and a usage history file for each member may be stored in the remote printing member database 30.

For example, in Fig. 10(B), each user is associated with a user ID (for example, "yama" for yamamoto) as a remote printing member, a user ID (yamamoto) as a member of the storage unit A, and a user ID (yaya) as a member of the storage unit B.

By using these storage related files for each member, the user ID's can be associated with the servers 11 and 10 for the same user (for example, yamamoto). therefore, the remote printing server 11 and the storage server 10 (for example, the storage A) can inter-operate easily. The user does not have to log-in (by inputting a password, for example) for each of the servers 11 and 10.

The usage history file for each member shown in Fig. 10C is log information to be used when data (for example, DA1) stored in the storage server 10 (for example, the storage unit A) is output from the MMK terminal 12 through the remote printing server 11. Conversely, when the data DA1 is uploaded to the storage server (for example, the storage unit A), the same log information can be stored in the usage history file for each member naturally.

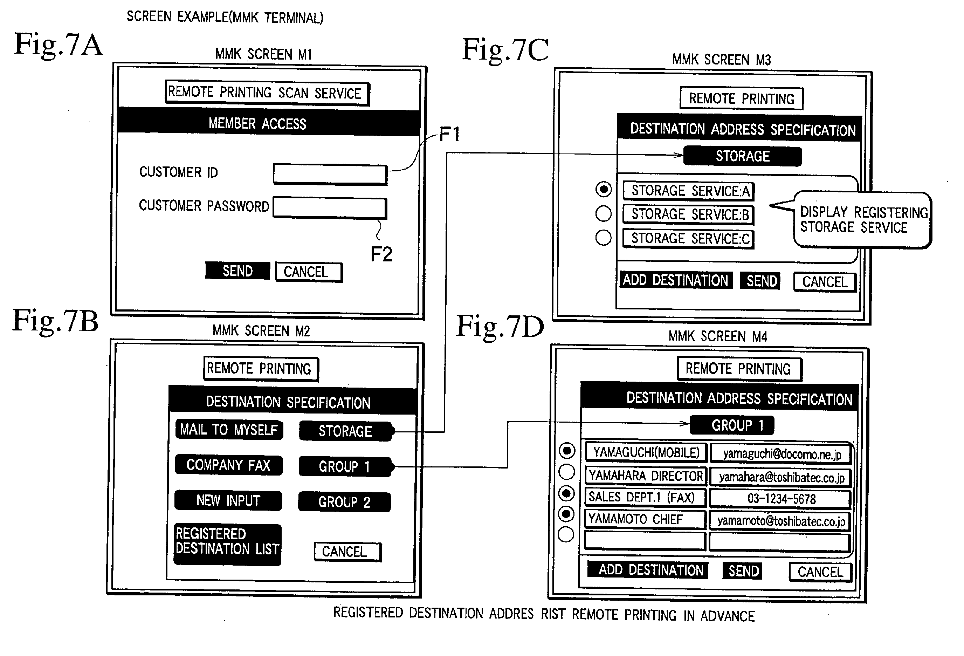

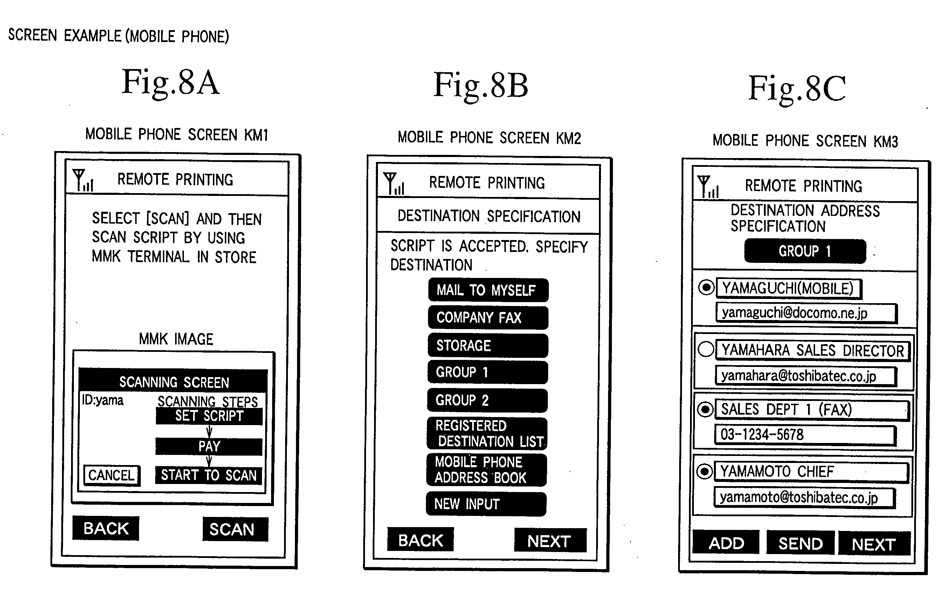

By the way, the remote printing server 11 must send to the MMK terminal 12 and/or the mobile telephone 14 information (destination list basic information), which is a basis for displaying a destination list (including names, sections, and e-mail addresses of destinations) as shown in a screen KM1 in Fig. 7B and in a screen KM2 in Fig. 8B (or in a screen M4 in Fig. 7B and in a screen KM3 in Fig. 8C), for example. As clearly shown in Figs. 7B to 7D, the destination list basic information includes information element ("STORAGE" button on the screen) indicating the transmission to a storage server (for example, the storage service A), which is a common destination of all users (or many users). However, most information elements are information (destination) unique to each of the users.

In other words, "E-MAIL TO ME" indicates the transmission to an e-mail address of a mobile telephone of each user. "GROUP 1" indicates the transmission to a group of one or multiple destinations selected by each user. "COMPANY FAX" indicates the transmission to a specific facsimile terminal (for example, Fax terminal 15) in each user's company.

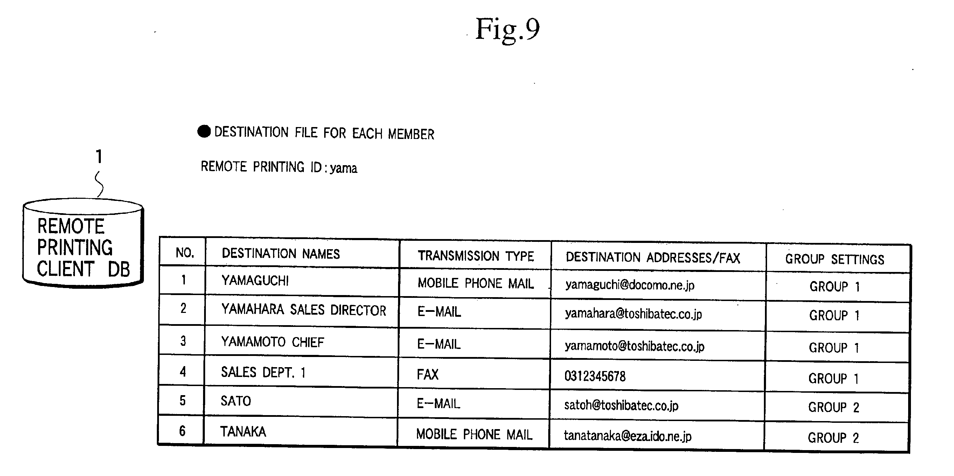

Therefore, the information (destination) unique to a user must be stored and be managed in advance so that the remote printing server 11 sends the destination list basic information. The user unique information may be stored along with the ID and/or the password in the remote printing member database 30. The user unique information may be organized in a relationship table having a structure as shown in Fig. 9, for example.

The user unique information may be stored in the storage server 10 side, and, as required, the remote printing server 11 may create the destination list basic information by interoperating with the storage server 10.

The remote printing database 31 is a database corresponding to the storage database (member folder) 29 in the storage server 10, The main data DA1 and/or the attribute information can be stored in the remote printing database 31. However, the remote printing server 11 is not responsible for storing data. Therefore, the remote printing server 11 only stores the data DA1 and/or attribute information temporally if any. When data must be stored continuously for a long period of time, the member folder 20 in the storage server 10 is used.

The member authentication portion 33 authenticates a user (for example, U1) accessing the remote printing server 11 by using a portion corresponding to the member authentication function portion 21 in the storage server 10 with reference to the content stored in the remote printing member database 30.

However, this embodiment is characterized in that data (DA1) is uploaded to the storage server 10 through the remote printing server 11 by using the MMK terminal 12. The data is not uploaded from the personal computer to the storage server 10 directly. Therefore, the member authentication function portion 33 in the remote printing server 11 functions first rather than the member authentication function 21 in the storage server 10.

The destination list extraction/transmission function portion 32 extracts and creates the destination list basic information from the remote printing member database 30, for example, in accordance with a request from the MMK terminal 12. Then, the destination list extraction/transmission function portion 32 returns the created information to the MMK terminal 12.

The file conversion function portion 34 converts a data format of a file as required. The data DA1 to be sent to a destination (including the storage server 10) desired by the user through the MMK terminal 12 and the remote printing server 11 is stored in the MMK terminal 12 in the file form once. For example, in accordance with a destination such as a mailer of the FAX terminal 12 and/or the mobile telephone 14, the format if the data DA1 must be converted to a different data format. In this case, the data format is converted in the remote printing server 11.

The data extraction functioning portion 35 from the MMK extracts data DA1 to be sent to the user-desired destination from the MMK terminal 12 and stores the DA1 in the remote printing member folder 31. Here, the attribute information is also extracted and is stored therein as necessary.

In general, the MMK terminal may be located in a desired place of a town. In view of the construction of this embodiment, the MMK terminal is desirably located in a place where a general user can easily stop by, such as a convenience store (CVS) and a station, equally and in higher density as much as possible. Therefore, the multiple MMK terminals 12 may be connected to the remote printing server 11. In order to extract the data DA1, the MMK terminal must be identified. At substantially the same time, multiple pieces of data (for example, DA1) may be sent from the same MMK terminal. Thus, each piece of data must be identified. In this embodiment, an MMK terminal can be identified by using an MMK-ID uniquely assigned to each MMK terminal. Multiple pieces of data can be identified by using a job No. created for each scan.

The content of the MMK-ID may be stored in the remote printing member folder 31 in advance along with the other information (such as information relating to the location) relating to the MMK terminal.

The individual MMK terminal itself is basically an information processing apparatus including a network function, like a personal computer. The function specifications of the MMK terminals connected to the remote printing server 11 may be unified entirely. However, the MMK terminal group is a significantly large infrastructure as a whole and is extended little by little over a long period of time. Therefore, new and old MMK terminals are mixed in the same system to operate. In other words, MMK terminals having a high function and a low function or a few functions and many functions may be mixed with higher possibility.

However, in order to input data DA1 according to this embodiment, an MMK terminal including a scanner function is preferably used. An MMK terminal without the scanner function must include at least an interface to connect with an external scanner. The external scanner may have a multifunction processor (MFP) combining two or more functions of a printer, a FAX terminal, a copier and so on.

A scanner included in the MMK terminal is not essentially different from the external scanner when viewing from an operating system (OS) or a central processing unit (CPU) of the MMK terminal 12. The MMK terminal does not always function as a scanner mainly. Therefore, the external scanner may be better in the scanning performance (such as resolution).

When a bottleneck having a low line speed exists anywhere in a circuit from the MMK terminal 12 to the remote printing server 11 in sending the data DA1, the user may have to wait for a long time in front of the MMK terminal to send a large file such as an image. This type of bottleneck is desirably removed to obtain an enough line speed.

When data DA1 is sent from a personal computer (for example, personal computer 13) at home, which is dial-up, IP-connected, the bottleneck is a telephone line as an access line (56 kbps in an analog circuit, 64 kbps or 128 kbps even in ISDN) in many cases. The MMK terminal can uses a faster line easily, such as a private line and ADSL. Therefore, a sufficiently high line speed can be obtained with higher possibility.

The MMK terminal 12 is convenient to use for outputting data DA1 stored in the storage server 10 once.

In this case, the remote printing server 11 may include, in addition to the shown components 30 to 35, a data encryption function portion for encrypting and decrypting data as necessary, a communication function portion for handling various kinds of protocols such as TCP/IP and HTTP, a FAX communication function portion for communicating with the FAX terminal 15, which is the destination, a mailing function portion for functioning as a mail server for sending an e-mail to, for example, a mailer, which is the destination and for interoperating with a mail server. The mobile telephone 14 used in this embodiment includes a telephone function and/or a browser basically as a mobile telephone and a radio communication function for directly communicating with the MMK terminal 12, such as Bluetooth and infrared rays.

If necessary, a wired communication function may be provided by using cable connection. However, wireless communication is preferable in view of the usability, the mechanical durability and so on. The infrared rays require an unobstructed view for communication. Thus, Bluetooth is easier to use in general. In addition to Bluetooth, IEEE 802.11b (2.4 GHz) or IEEE 802.11a (5GHz) may obtain the usability substantially equal to that of the Bluetooth. However, this embodiment uses Bluetooth.

The mobile telephone 14 used in this embodiment handles a transportable program, such as Java application, as described later. The transportable program such as Java application is executed after being transported and being downloaded from the outside over a network. Especially, Java application advantageously includes a characteristic independent from the platform.

A mobile telephone compliant with a Java application over many mobile telephone networks. The function specifications of the Java application differ largely variously among mobile telephone networks but can be divided into two roughly. One is of limited type in which the Java application limits accesses to personal identification management (PIM) software and/or a memory of a mobile telephone for the security (this types is compliant with the security sandbox model, which is widely used in Java applets to be executed in a browser of a personal computer). The other is of unlimited type, which does not perform this kind of limitation) for variation and/or flexibility of functions.

While the storage server 10 and the remote printing server 11 have been described as separate servers, the components (function portions) 20 and 21 and 30 to 35 may be normally implemented in separate (different) servers, respectively, in reality in view of the characteristics. Therefore, naturally, the storage server 10 and the remote printing server 11 may construct one site each.

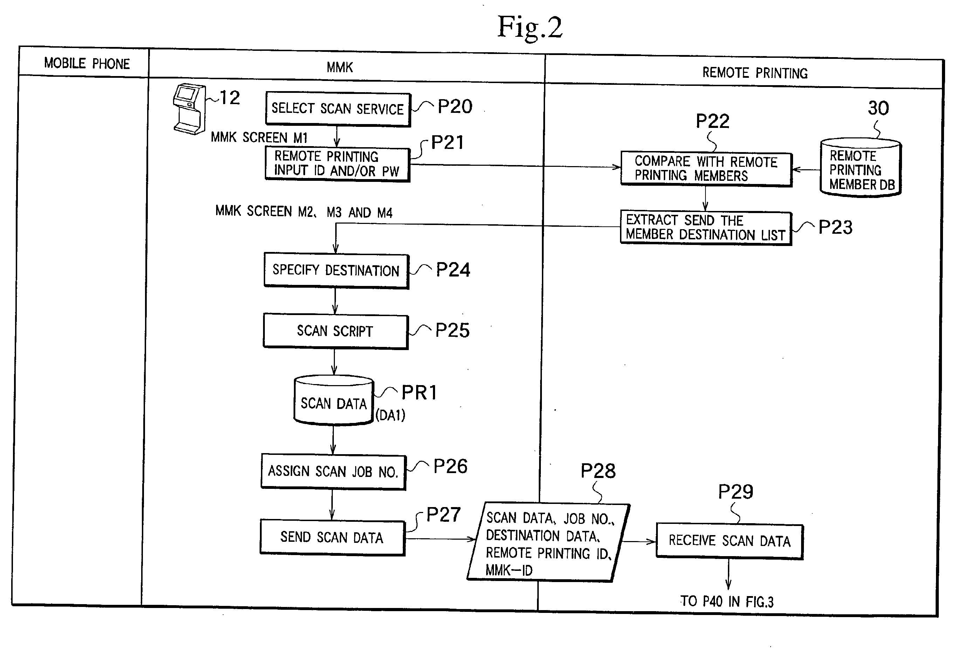

An operation of this embodiment having these constructions will be described below with reference to operational sequences in Figs. 2 to 6.

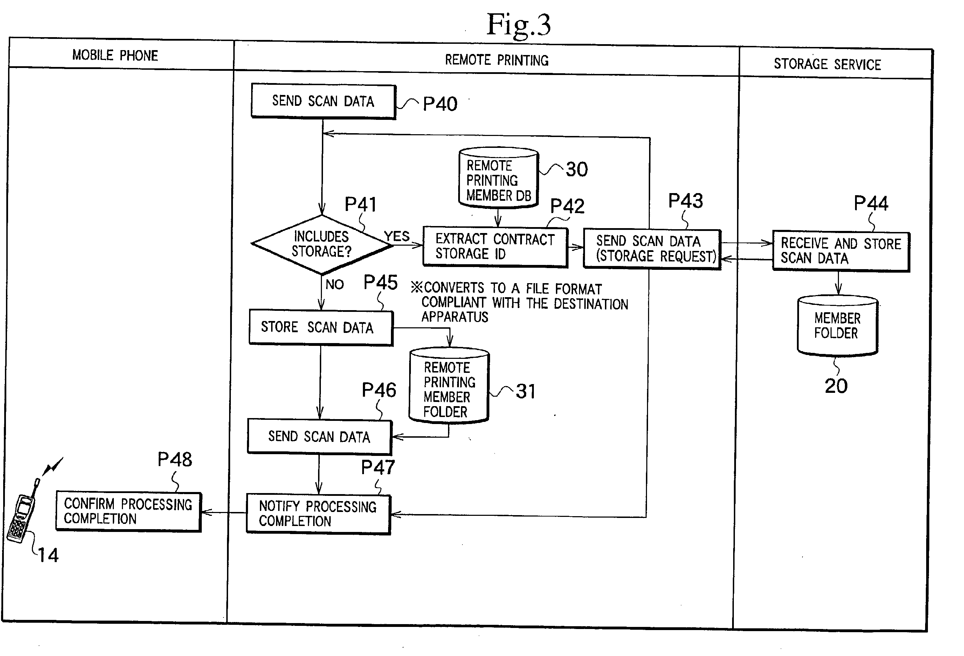

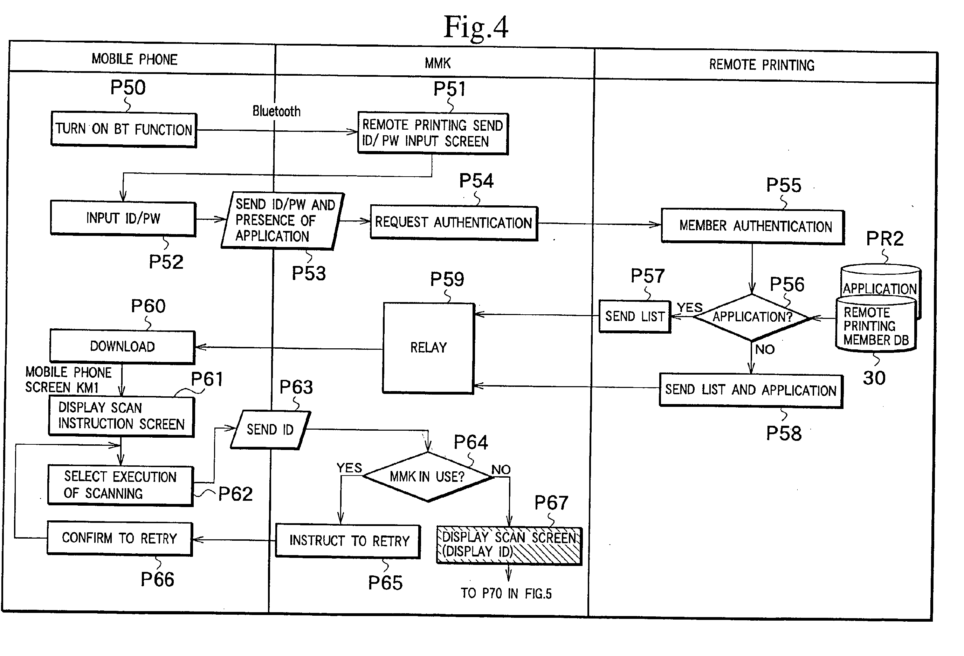

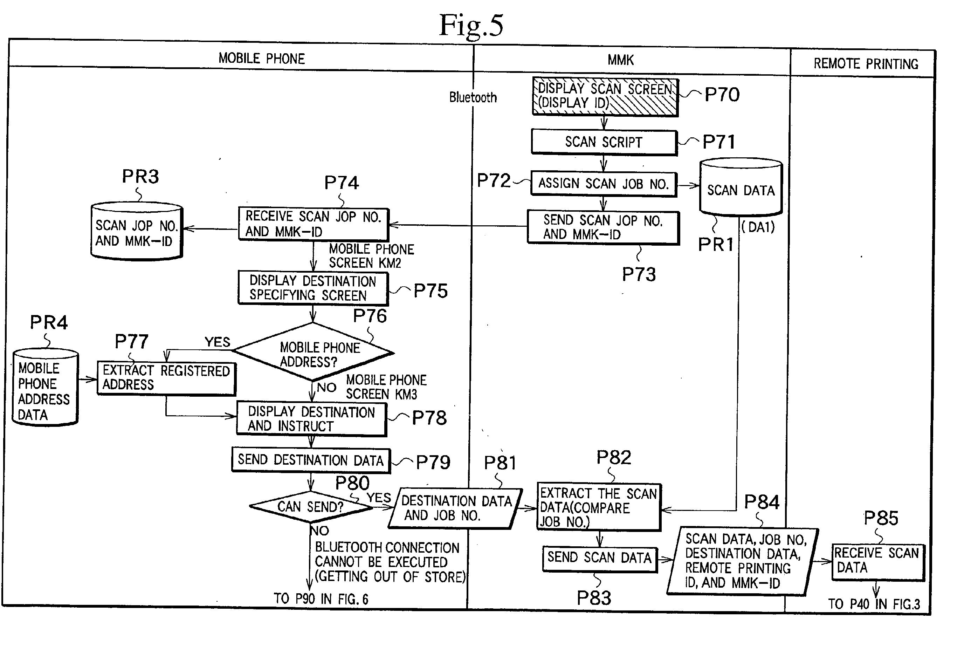

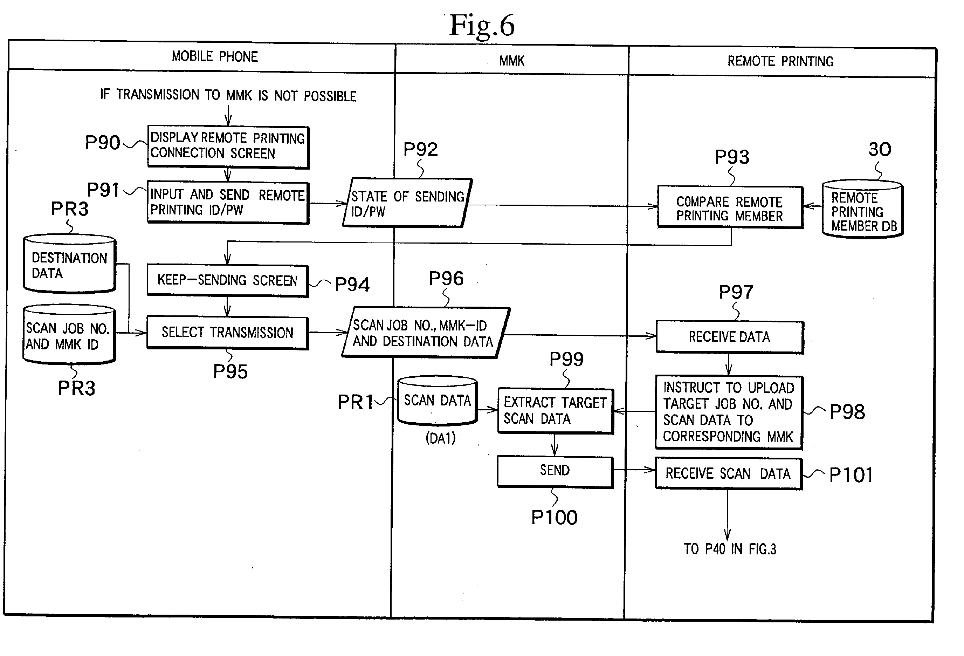

An operation sequence in Fig. 2 includes steps P20 to P29. An operational sequence in Fig. 3 includes steps P40 to P48. An operational sequence in Fig. 4 includes steps P50 to P67. An operational sequence in Fig. 5 includes steps P70 to P85. An operational sequence in Fig. 6 includes steps P90 to P101.

### Operation of Embodiment

Here, the user U1 has already registered for membership with the remote printing server 11 and one or multiple storage servers 10 (for example, storage unit A).

For the membership registration, the registered storage server 10 may be linked so as to read a membership registration screen for the remote printing server 11 during logging-in. Thus, a user ID (for example, "yamamoto" in Fig. 10B) in the logged-in storage server 10 (storage unit A) can be sent to the linked remote printing server 11 automatically when reading the membership registration screen. The remote printing server can create storage related file for each member as shown in Fig. 10B simultaneously with the membership registration. After that, the correspondence relationship of user ID's in the storage server 10 and remote printing server 11 can be recognized in the remote printing servers 11.

When a provider of the storage service and a provider of the remote printing service are the same, the correspondence relationship may be managed by either one of them. When they are different, the correspondence relationship must be managed by both of them because of the charging matters.

Through the membership registration, the user U1 can register with the storage server 10 and view Web contents such as an image, a moving picture, a document, a product catalog, program code, and a software package, as described above. In addition, the user U1 can download and view Web contents open to public, which are registered by the other. The user U1 also can send data DA1 from the remote printing server 11 to a desired destination not through the storage server 10.

Next, an operation in which a user U1 having registered for the membership uses a storage system according to this embodiment will be described specifically with reference to Figs. 2 to 6. Figs. 2 and 3 show an operation for uploading data DA1 obtained by scanning to the storage server 10. Figs. 4 to 6 shows a case where the same operation is implemented by using Bluetooth of the mobile telephone 14.

Screens M1 to M4 shown in Figs. 7A to 7D are display screen examples of the MMK terminal 12. Screens KM1 to KM3 shown in Figs. 8A to 8C are display screen examples of the mobile telephone 14.

### Input Operation (Without Bluetooth of the mobile telephone)

In Fig. 2, the user U1 manipulates the MMK terminal 12 and selects the scanning service (step P20). Then, for example, the screen M1 shown in Fig. 7A is displayed by the MMK terminal 12. The user ID ("yama", here) of the user U1 in the remote printing server 11 is input to a text field F1 on the screen M1. A password is input to a text field F2. Once the "SEND" button is pressed, the user ID and the password are received by the MMK terminal 12 and then send from the MMK terminal 12 to the remote printing server 11 (step P21).

The remote printing server 11 compares the user ID and the password with the user ID and the password stored in the remote printing member database 30 for user authentication (step P22). Here, if necessary, a terminal ID (MMK-ID) may be sent from the MMK terminal 12 for terminal authentication at the same time.

If the authentication result is negative, the processing ends here. If the authentication result is positive, the processing goes to a step P23.

In the step P23, the user U1 having the user ID "yama" creates the destination list basic information based on pre-registered user unique information in the remote printing member database 30 and sends the information to the MMK terminal 12.

The MMK terminal 12 receives the information and displays a screen M2 as shown in Fig. 7B. When the user U1 presses a button on the screen M2, for example, a screen M3 in Fig. 7C or a screen M4 in Fig. 7D may be displayed (step P24).

When a "STORAGE" button, for example, among button on the screen M2 is pressed, the screen M3 is displayed. In order to specify a destination at the step P24, a storage server to which the data DA1 is uploaded can be specified by filling a button on the screen M3.

Since the authentication result is positive at the step P22, the user U1 is a member of the remote printing server 11 and a member of at least one storage server (if membership-registration with the remote printing server 11 is not allowed without membership registration with any storage server). However, all of the users do not have to register with the member ship of all of the storage servers (for example, all of the storage units A to E) interoperating with the remote printing server 11. Therefore, the number and the combination of the storage services displayed on the screen M3 may differ for each user. Alternatively, all of the storage services of the storage units A to e may be displayed, and then membership registration with the storage servers by each user may be reflected on a response upon user's selection.

Without interoperating with the storage server 10, the remote printing server 11 can independently provide useful services (such as services to attach and send data DA1 by e-mail and to send the data DA1 to the FAX terminal 15) to users. Thus, naturally, the user may register with the membership of the remote printing server 11 without registering with the membership of any storage servers. In this case, the display of the "STORAGE" button may be omitted on the screen M2 for a user only registering with the membership of the remote printing server 11.

A storage server (storage service) may be selected exclusively on the screen M3 in Fig. 7C, where only one selection is allowed. Alternatively, multiple selection at the same time may be allowed. Once the "SEND" button is pressed on the screen M3, the processing goes to the next step P25. Here, when a "ADD DESTINATION" button is pressed, a destination can be added on another screen with storing the selection on the screen M3. A "CANCEL" button may be pressed to return to a previous screen, that is, the screen M2, by canceling the selection on the screen M3.

User unique information specified by the user U1 in advance and a list of destinations belonging to a group 1 are displayed the screen M4 in Fig. 7D.
Conventionally, the screen M4 displays an e-mail address and a FAX number, which have been displayed on the same selection screen conventionally. This feature is not limited to the e-mail address and the FAX number. Essentially, different kinds of destination can be displayed as a list on the same screen.

Conventionally, a screen for sending data to a FAX terminal, for example, and a screen for sending e-mail have to be displayed separately. Therefore, many steps are required for manipulating screen displays. However, according to this embodiment, these display manipulations can be performed on a single screen. Thus, the manipulation load on the user U1 can be reduced.

Clearly from Fig. 7D, the screen M4 provide user U1 with a graphical user interface using many graphics. Event driven programming using the object oriented technology is performed for GUI programming.

The processes performed when buttons "SEND", ADD DESTINATION" and "CANCEL" on the screen M4 are the same as those for the screen M3. Therefore, display order of screens (for example, M3 and M4) is not important. When the "ADD DESTINATION" is repeated and finally the button "SEND" is pressed, all of the selections relating to the destinations (for example, selections of storage servers on the screen M3 and selections of e-mail addresses on the screen M4), that is, destination data is sent to the remote printing server 11.

However, the destination data is actually sent to the remote printing server 11 at a step P28, which will be described later. Thus, until then, the destination data must be stored in the MMK terminal 12.

When the destination is specified at the step P24, a script is scanned by using the scanner at the step P25. The data recorded on paper is electrified. Once the data (scan data) DA1 is created, the data DA1 is temporally stored in a memory device PR1 included in the MMK terminal 12. Then, the job number is given to the data DA1 (step P26), which is sent to the remote printing server 11 (step P27).

Here, in addition to the scan data DA1, the job number, the destination data, the MMK-ID and a remote printing ID, which uniquely specified the remote printing server 11, are transmitted. The remote printing ID can be used for identifying scan data DA1 addressed to the remote printing server itself when multiple remote printing servers 11 are connected to the MMK terminal 12. When multiple remote printing servers 11 are connected to the storage server 10, the remote printing ID can be used for managing log information in the storage server 10 side.

The order of the steps P24 and P25 are not limited to those shown in Fig. 2. The step P25 may be implemented first.

When the MMK terminal 12 does not have a scanner and an external scanner of a multifunction machine, for example, is used, the destination setting and the script scanning may not implemented continuously depending on the circumstance of the user U1 and the user-traffic of the multifunction machine and the MMK terminal 12. As a result, when the script scanning is performed first, a large amount of scan data (including the DA1) from many users may be stored in the memory device PR1 of the MMK terminal 12. In this case, in order to surely prevent a state where scan data cannot be stored due to the lack of capacity, a huge amount of memory capacity is required for the memory device PR1.

From this point of view, it is efficient to execute the destination setting first at the step P24 and then to execute processing up to the step P28 immediately after script scanning. Then, the scan data DA1 and so on may be sent to the remote printing server 11. A different job number is given to each scan when the data DA1 includes multiple pages to be scanned. The steps P26 to P28 are executed foe each scan, but the same destination data can be reused.

When the data DA1 includes an image, which is difficult to obtain a higher compression efficiency, the data DA1 to be scanned may become significantly large. By executing the step P28 for each scan, when one user (for example, user U1) scans the huge number of pages, a memory device PR1 having a smaller amount of capacity can handle the large data DA1.

Subsequent to the step P28, when all of the data transmitted at the step P28 (all of the data is called record) is received by the remote printing server 11 (step P29), the processing goes to a step P41 in Fig. 3. The step P29 in Fig. 2 corresponds to a step P40 in Fig. 3.

At the step P41 executed by the remote printing server 11, it is determined whether or not the transmitted data in the record at the step P28 includes a destination setting instruction the storage of the data into the storage server 10.

If so, the step 41 branches off to the YES route. Then, a storage ID (for example, "A" of the storage unit A) of the storage server selected by the user U1 on the screen M3 and contracting and interoperating with the remote printing server 11 is extracted (step P42). Then, the scan data DA1 is sent to the storage server (step P43).
The storage server 10 (storage unit A) receives and stores the scan data DA1 in the member folder 20 of the user U1 in the storage database (step P44). If necessary, the attribute information is stored at the time of he storage (registration).

Information such as a registration date in the attribute information can be created by the storage server 10 automatically. For example, a name of a person who has registered data can be created by the storage server 10 based on the data stored in the member database 22. In this case, the user U1 must specify the presence of the access limit and how it is limited individually. For example, when the data DA1 is open to public, the access limit is not set. On the other hand, when the data DA1 is not open to public and is shared only by specific people or a specific group, these people or the group must be specified individually. In some cases, even when the data DA1 is open to public, limit settings must be specified (such as allowing only to read data DA1 and to update).

Therefore, when attribute information requiring individual specification by the user U1 is stored, a screen prompting to select or to input individual settings is required in relation to the screen M3.

Naturally, it is easy that the data uploaded through the MMK terminal 12 is open to public (or not open to public) without any restriction. Alternatively, after uploading data, the user U1 may use a mobile telephone 14 or a personal computer at home to change the limit settings. A user generally has an access authority for all kinds of accesses to files in his/her home directory (that is, member folder) including updating and deletion of a file, deleting the home directory itself, and changing the limit setting.

When each of the storage servers specified as the destinations receives the data DA1 normally, the storage server returns a response signal for confirming the receipt to the remote printing server 11. At a step P43, the fact that the receipt confirming response signal is received is communicated to the executing module or a module connected to the module at a step P47. Then, the destination data corresponding to the storage server having returned the receipt confirming response signal is deleted from the destination data in the record. Then, a new record is created and is supplied to the step P41, and the processing returns to the step P41.

In other words, the loop including the steps P41 to P43 is repeated until the data DA1 is sent to all of the storage servers specified as the destinations. The loop is repeated when multiple items are selected on the screen M3.

If the storage server is not included in the destination data in the supplied record, the step P41 branches off to the No route. Then, the processing goes to a step P45.

At the step P45, the data DA1 is converted in a file form compliant with a destination apparatus and is stored in the remote printing member folder 31.

The data DA1 in the converted file format is sent to destinations such as the FAX terminal 15 and/or the mailer in accordance with the transmission data in the record (step P46). Some types of destinations may return a response signal for receipt confirmation. In all cases, once it is determined that the transmission to all of the destinations in the destination data is completed including the content of the receipt confirmation signal supplied at the step P43, a notification for notifying the completion of the processing is given to the mobile telephone 14 carried by the user U1 (steps P47 and P48).

The notification of the processing completion can be transferred from the MMK terminal 12 to the mobile telephone 14 by using Bluetooth. However, wide area communication device is preferably used such as an e-mail.

If many destinations are included in the destination data or if the scan data DA1 is large in size, the processing from the step P40 to the step P47 may required a longer period of time. However, the processing completion can be notified to the mobile telephone 14 by mail, the user U1 does not have to wait in front of the MMK terminal 12 for a long time only for receiving the notification of the processing completion.

The MMK terminal 12 is also efficiently not occupied by a single user for a long period of time.

Next, an operation for specifying a destination by using Bluetooth between the mobile telephone 14 and the MMK terminal 12 will be described with reference to Figs. 4 to 6. The processing flow in Figs. 4 to 6 is basically the same as that in Figs. 2 and 3 except that the processing is advanced through the manipulation of the mobile telephone 14 by using Bluetooth. Input Operation (With Bluetooth of the mobile telephone)

In Fig. 4, when Bluetooth (BT) function included in the mobile telephone 14 starts to operate (step P50), the MMK terminal 12 causes the mobile telephone 14 to display a screen for entering a user ID and a password as a member of the remote printing server 11. While not shown, the screen may be the same as the screen M1, which is a display screen of the MMK terminal 12.

Then, like the step P21, the user U1 enters his/her usr ID and password for his/her remote printing server 11 (step P52). In addition to the user ID and the password, information (application presence information) indicating whether or not a predetermined Java application exists in the mobile telephone 14) is transferred to the MMK terminal 12 through Bluetooth (step P53). By sending these kinds of information to the remote printing server 11, the MMK terminal 12 requests the authentication (step P54).

The remote printing server 11 having received the information verifies the membership (step P55) in the same manner as that of the step P22. If he verification result is positive, the application presence information is examined (step P56).

The Java application has a function for displaying screens KM1 to KM3 corresponding to the screens M2 and M4 on the mobile telephone 14. Therefore, a destination cannot be specified by using the mobile telephone 14 without the Java application.

The remote processing in the remote printing server 11 branches off to the Yes route if the application presence information indicates that the Java application exists in the mobile telephone 14. Like the step P23, the destination list basic information is sent to the MMK terminal 12 (step P57). Conversely, if the information indicates that the Java application dose not exist, the Java application is sent along with the destination list basic information (step P58). In the processing at the step P58, the Java application is sent first, and then the destination list basic information is sent. The body of the Java application is stored in the memory device PR2 in the remote printing server 11.

The destination list basic information and/or the Java application sent at the steps P57 and P58 are received by the MMK terminal 12. The MMK terminal 12 uses Bluetooth to send them to the mobile telephone 14 for relay processing (P59).

When the Java application is downloaded to the mobile telephone 14, the same operation as the one for the existing Java application is performed. The Java application processes the downloaded destination list basic information and displays the screen KM1 shown in Fig. 8A (step P60 and P61).

The screen KM1 displays character strings for prompting the user U1 for manipulating and the user ID, yama, of the user U1.

The user U1 views the screen KM1 and selects "SCAN" on the screen KM1 in accordance with the instruction in the character strings displayed on the screen KM1. After that, a scanner of the MMK terminal 12 (or a scanner of a multifunction machine connected to the MMK terminal 12) is used to scan. When the "SCAN" is selected on the screen KM1 (step P62), the user ID (yama) of the user U1 is sent to the MMK terminal 12 automatically by using Bluetooth (step P63).

The Java application can obtain the user ID to be sent here in various ways. However, in the limited type, the Java application cannot access PIM software, for example, of the mobile telephone 14. Therefore, for example, the Java application must be sent by having the user ID (yama) at the step P58.

Also in the limited type, the Java application is prohibited to communicate with the other servers than the sending server (the remote printing server 11, here). Therefore, the processing for capturing the user ID sent to the remote server 11 originally must be performed in the MMK terminal 12 so that the MMK terminal 12 can obtain the user ID.

When the Java application is of the unlimited type, the user ID can be obtained from the PIM software, for example, of he mobile telephone 14. In addition, the user ID can be sent to the MMK terminal 12. Therefore, the processing performed by the remote printing server 11 and/or the MMK terminal 12 becomes easier with the unlimited type of Java application. The difference between these limited type and unlimited type affects on the processing between steps P73 and P74, which will be described later.

The transmission of the user ID performed by the Java application corresponds to the request for displaying the scan screen to the MMK terminal 12.

Once the user Id is received, the MMK terminal 12 examines whether the MMK terminal 12 itself is being used or not (that is, whether the request for displaying the scan screen can be handled or not) (step P64).

If the MMK terminal is being used and cannot handle the display request, the step P64 branches off to the YES route, to prompt the mobile telephone 14 for the retrial of the display request (step P65). Once it is received by the Bluetooth (step P66), the mobile telephone 14 displays the screen KM1 and gives to the user U1 the opportunity to select the "SCAN" again.
When the user U1 selects "SCAN" in accordance with this (P62), the user ID is sent (P63).

Therefore, the loop including the steps P62 to P66 is repeated until the MMK terminal 12 is no longer used.

In order to repeat the loop here, the user U1 must select the "SCAN" on the screen KM1 of the mobile telephone 14. However, the loop may be repeated automatically. Then, the step P66 is performed between the steps P63 and P62 instead of between the steps P 62 and P61 in Fig. 4. Naturally, a step is required for exiting from the endless loop in this case.

If the processing branches off to the NO route as a result of the examination in the step P 64, the processing goes to a step P67, where a scan screen is displayed by the MMK terminal 12. The step P67 in Fig. 4 corresponds to a step P70 in Fig. 5.

In Fig. 5, aster the step P 70, script scanning is performed (P72). A job number is given to the scan data DA1 (P72), and the scan data DA1 is stored in the memory device PR1.

The job number is sent to the mobile telephone 14 along with the MMK-IF of the MMK terminal 12 by using Bluetooth (P73). Here, the user U1 operates the MMK terminal 12 by carrying the mobile terminal 14 at the same time. Therefore, the sufficiently short distance between the MMK terminal 12 and the mobile telephone 14 is effective for the communication through Bluetooth.

The Java application within the mobile telephone 14 having received the job number and the MMK ID stores them (step P74) and displays a screen KM2 shown in Fig. 8B on the mobile telephone 14 (step P75). The screen KM2 corresponds to the screen M2. However, the screen KM2 includes a "MOBILE PHONE ADDRESS BOOK" button, which is not included in the screen M2. The mobile phone address book is a kind of PIM software included in the mobile telephone 14.

When the user U1 selects the "MOBILE PHONE ADDRESS BOOK", the step P70 branches off to the YES route. Then, an address registered in the mobile phone address book is extracted (step P77) and is used when the user U1 selects a destination (step P78).

As described above, the limited type of Java application cannot access the mobile phone address book (PIM software) included by the mobile phone 14. Thus, the step above is for the unlimited type.

In order to perform the same processing by using the limited type of Java application, data similar to the mobile telephone address book needs to be stored in the remote printing server 11 in advance. Then, the contents of the mobile telephone address book must be obtained through communication between the limited type of Java application in the mobile telephone 14 and the remote printing server 11.

When, for example, "GROUP 1" is selected on the screen KM2, a screen KM3 shown in Fig. 8C, for example, is displayed at a step P78.

Information such as the name, division, e-mail address and FAX number of a destination in the destination list basic information for displaying the screen KM3 may be sent along with the Java application at the step P58. Alternatively, the destination information may be obtained through the communication between the Java application in the mobile telephone 14 and the remote printing server 11.

When the user U1 selects "SEND" displayed on the screen KM3, for example, the selection for the destination by the user U1 is confirmed. Then, the destination data is sent (step P79).

In this case, the mobile telephone 14 and the MMK terminal 12 must be close to each other in distance for the communication through Bluetooth. When the user U1 carrying the mobile telephone 14 is far away from the MMK terminal 12, the destination data cannot be sent by using Bluetooth.

At a step P80, whether the transmission by using Bluetooth is possible or not is examined. If possible, the processing branches off to YES route, where the destination data and the job number are sent to the MMK terminal 12 (step P81). The MMK terminal 12 receives them and searches and extracts the scan data DA1 from the memory device RP1 by using the job number as a key.

Then, the scan data DA1 is sent to the remote printing server 11 along with the job number, destination data, remote printing ID and MMK-ID (steps P83 and P84). After the remote printing server 11 receives them (step P85), the same processing similar to the one after the step P40 in Fig. 3 is performed. That is, the step P85 corresponds to the step P40.

On the other hand, if the examination result at the step P80 indicates that the transmission is not possible, the step P80 branches off to the NO route and the processing goes to a step P90 in Fig. 6. After that, instead of Bluetooth, which cannot be used due to the far distance, wide area communication is performed by using a browser.

The remote printing server 11 is accessed from the browser of the mobile telephone 14 in the hypertext system by using the URL of the remote printing server 11 (step P90). Then, a screen for entering a user ID and/or a password can be read by the browser of the mobile telephone 14 for the remote printing server 11 through a predetermined top page, for example (step P90). This screen is not shown but may be similar to the screen M1 shown in Fig. 7A.

By entering the user ID and the password on the screen, the user ID and the password are sent from the browser of the mobile telephone 14 to the remote printing server 11, which is a Web server, (step P92). The processing from the step P92 to the step P97 is performed without through the MMK terminal 12.

The remote printing server 11 as the Web server receives the user ID and the password of the user U1, which are authenticated by referring to the contents of the remote printing member database 30 through CGI, for example (step P93). If the authentication result is positive, the browser of the mobile telephone 14 is caused to display a keep-sending screen (step P94). Since the destination data is fixed in the processing up to the step P79, the keep-sending screen may only prompt the transmission of the fixed destination data. For a case where the fixed destination data is not stored in the mobile telephone 14, a screen like the screen KM2 shown in Fig. 8B may be displayed.

In both cases, the fixed destination data read from the memory device PR3 of the mobile telephone 14 or the newly fixed destination data and the job number and the MMK-ID (received at the step P74) read from the memory device PR3 are sent to the remote printing server 11 (steps P95 and P96).

Once they are received (step P97), the remote printing server 11 instructs the MMK terminal 12 uniquely specified by the received MMK-ID to send the scan data DA1 specified by the job number to the remote printing server 11 (step P98). In accordance with the instruction, the MMK terminal 12 extracts the scan data DA1 from the memory device PR1 (step P99) and sends the scan data DA1 to the remote printing server 11 (step P100).

The remote printing server 11 receives the data DA1 (step P101) and executes processing following the step P40 based on the destination data. That is, the step P101 corresponds to the step P40.

The step P99 is possibly executed after long period of time from the execution of the step P71. Thus, the other scan data than the scan data DA1 scanned by the other user than the user U1 may not be stored in the memory device PR1. Therefore, a job number is highly needed for identifying the san data DA1.

### Advantage of This Embodiment

As described above, according to this embodiment, an MMK terminal located everywhere in a town for final inputs (such as uploading to a storage server) to the destination is used along with a mobile telephone with high mobility. Therefore, an input function such as a scanner can be provided to a mobile telephone. Thus, each user can perform the input in a convenient place.

In general, the MMK terminal is fixed everywhere in a town. Therefore, a user can input from the MMK terminal in a desired fixed location selected by the user freely. Essentially, the MMK terminal can have mobility close to a mobile telephone.

In this embodiment, the storage server function can be used sufficiently to obtain a higher degree of sharing. Thus, the excellent usability and the mobility can be obtained.

In this embodiment, when a user registers with membership of a storage server, the user is automatically registered with a remote printing server. Therefore, the sufficient number of registered members can be obtained surely even by a newly starting remote printing service, which is preferred in business operation.

### Other Embodiments

Various kinds of processing can be performed by the unlimited type of Java application.

For example, in the above-described embodiment, if the authentication result is positive, a Java application (required application) required for specifying a destination unrestrictedly is sent from the remote printing server 11. However, for example, when the user U1 is a valid user but is behind with the charge payment, a Java application having a function for deleting the required application existing in the mobile telephone 14 already may be sent. The deleting application can have a function for displaying a message for prompting the charge payment to the user U1. Once the charge is paid, a new Java application (recovering application) may be sent which have a function of the required application and the function for deleting the deleting application.

If necessary, a transportable program other than Java applications may be used.

In the above-described embodiment, when a destination is specified by using Bluetooth of the mobile telephone 14 in Fig. 4 to 6, for example, scanning is performed first and then specifying the destination is performed. However, their turns may be switched as necessary. As described before and after the step P80 in Fig. 5, scanning can be performed but the destination cannot be specified with the scan data DA1 remained in the memory device PR1 of the MMK terminal 12. This situation can be avoided by switching the turns.

If a destination is specified first, the scan data DA1 can be sent to the remote printing server 11 immediately after scanning. Therefore, the correspondence relationship between the destination data and the scan data is sufficiently clear, and the use of job numbers may not be used.

The scanning of multiple pages may be interrupted in the middle. In this case, if even one page has been scanned, the scan data can be sent to the input destination automatically in accordance with the determination of the MMK terminal 12.

By using the order, the same advantage can be specified as the one described for the turns of the steps P24 and P25.

The mobile telephone used in the above-described embodiment can be replaced by any other kinds of mobile information terminal such as a PHS terminal.

While the storage server 10 and the remote printing server 11 are provided separately (in different sites) in the above-described embodiment, they may be naturally provided in the same site if the services are provided by the same service provider.

## Claims

1. An information storage input system for storing predetermined storage data in a storage server on a network accessible from a communication device open to public, comprising:
a plurality of remote input terminal for inputting supplied input data in a predetermined input form;
a remote input server for receiving input data from the remote input terminal; and
a mobile communication terminal for communicating with at least the remote input server,
wherein, at least when the input data is stored in the storage server as the storage data, the remote input server notifies the fact to the mobile communication terminal.

2. An information storage input system for storing predetermined storage data in a storage server on a network accessible from a communication device open to public, comprising:
a plurality of remote input terminal for inputting supplied input data in a predetermined input form;
a remote input server for receiving input data from the remote input terminal; and
an input request communication terminal for sending a primary input request for the input data to the remote input terminal or the remote input server,
wherein, in accordance with the primary input request sent from the input request communication terminal, the input data is input from the remote input terminal to the remote input server and the remote input server sends a secondary input request to the storage server so that the input data is stored as the storage data.

3. An information storage input system according to Claim 2, the input request communication terminal comprising:
a short distance communication portion for performing wireless or wired communication with the remote input terminal at short distance; and
an unlimited wireless communication portion for performing communication with the remote input server in an unlimited manner in distance,
wherein, when the primary input request is sent to the remote input terminal, the short distance communication portion is used, and when the primary input request is sent to the remote input server, the unlimited wireless communication portion.

4. An information storage input system according to Claim 3,
wherein, when the primary input request is sent to the remote input terminal, and when the primary input request is sent to the remote input server, the input data is supplied to the storage server through the remote input terminal and the remote input server and is stored in the storage server as the storage data.

5. An information storage input system according to Claim 4, in which the remote input server and the storage server adopt membership systems, further comprising:
a first interoperating portion for causing the remote input server and the storage server to interoperate,
wherein a member of one of the remote input server and the storage server can be treated by the first interoperating portion when an authentication result is positive in one of the servers, in the same manner as a case where an authentication result is positive in the other server.

6. An information storage input system according to Claim 2,
wherein the primary input request sent from the input request communication terminal includes output-destination specification information for specifying where the input data is finally output after storing the input data in the storage server.

7. An information storage input system according to Claim 6,
wherein the primary input request sent from the input request communication terminal includes output-form specification information for specifying a final output form.

8. An information storage input system according to Claim 7,
wherein output history information including the output-form specification information is stored in the remote input server or the storage server, and
wherein the output form specification information in the history information is reused when the primary input request is input.

9. An information storage input service for storing predetermined storage data in a storage server on a network accessible from a communication device open to public, comprising the steps of:
inputting supplied input data in a predetermined input form by using a remote input terminal;
receiving input data from the remote input terminal by using a remote input server; and
communicating with at least the remote input server by using a mobile communication terminal,
wherein, at least when the input data is stored in the storage server as the storage data, the remote input server notifies the fact to the mobile communication terminal.

10. An information storage input service for storing predetermined storage data in a storage server on a network accessible from a communication device open to public, comprising the steps of:
inputting supplied input data in a predetermined input form by using a remote input terminal;
receiving input data from the remote input terminal by using a remote input server; and
sending a primary input request for the input data from an input request communication terminal to the remote input terminal or the remote input server,
wherein, in accordance with the primary input request sent from the input request communication terminal, the input data is input from the remote input terminal to the remote input server and the remote input server sends a secondary input request to the storage server so that the input data is stored as the storage data.

11. An information storage input service according to Claim 10, comprising the steps of, by using the input request communication terminal:
performing wireless or wired communication with the remote input terminal at short distance by using a short distance communication portion included in the input request communication terminal itself; and
performing communication with the remote input server in an unlimited manner in distance by using an unlimited wireless communication portion,
wherein, when the primary input request is sent to the remote input terminal, the short distance communication portion is used, and when the primary input request is sent to the remote input server, the unlimited wireless communication portion.

12. An information storage input service according to Claim 11,
wherein, when the primary input request is sent to the remote input terminal, and when the primary input request is sent to the remote input server the input data is supplied to the storage server through the remote input terminal and the remote input server and is stored in the storage server as the storage data.

13. An information storage input service according to Claim 12, in which the remote input server and the storage server adopt membership systems, further comprising the steps of:
causing the remote input server and the storage server to interoperate by using a first interoperating portion,
wherein a member of one of the remote input server and the storage server can be treated by the first interoperating portion when an authentication result is positive in one of the servers, in the same manner as a case where an authentication result is positive in the other server.

14. An information storage input service according to Claim 10,
wherein the primary input request sent from the input request communication terminal includes output-destination specification information for specifying where the input data is finally output after storing the input data in the storage server.

15. An information storage input service according to Claim 14,
wherein the primary input request sent from the input request communication terminal includes output-form specification information for specifying a final output form.

16. An information storage input service according to Claim 15,
wherein output history information including the output-form specification information is stored in the remote input server or the storage server, and
wherein the output form specification information in the history information is reused when the primary input request is input.

17. A screen display system for displaying a plurality of display items on a same screen,
wherein a plurality of display items corresponding to different kinds of internal processing are displayed on a same screen at the same time.
